# NEUE EUROPÄISCHE PATENTSCHRIFT

(11) **EP 1 377 389 B2**
(45) Veröffentlichungstag und Bekanntmachung des Hinweises auf die Entscheidung über den Einspruch: **01.04.2015**
(45) Hinweis auf die Patenterteilung: 23.02.2005
(21) Anmeldenummer: 02735016.4
(22) Anmeldetag: 26.03.2002
(51) Int. Cl.: B05C 1/00

(54) **VERFAHREN UND VORRICHTUNG ZUM AUFTRAGEN VON FLUIDEN**
METHOD AND DEVICE FOR APPLYING FLUIDS
PROCEDE ET DISPOSITIF D'APPLICATION DE FLUIDES

(30) Priorität: 10.04.2001 DE 10117875
(43) Veröffentlichungstag der Anmeldung: 07.01.2004
(73) Patentinhaber: voxeljet AG, 86316 Friedberg (DE)
(72) Erfinder: EDERER, Ingo, 86926 Pflaumdorf (DE); TÜRCK, Harald, 81245 München (DE); HÖCHSMANN, Rainer, 86682 Genderkingen (DE)
(74) Vertreter: Helbig, Christian
(86) Internationale Anmeldenummer: PCT/DE2002/001103
(87) Internationale Veröffentlichungsnummer: WO 2002/083323

(56) Entgegenhaltungen:
- EP-B1- 0 538 244
- WO-A1-00/51809
- WO-A1-01/41939
- WO-A1-01/96048
- WO-A1-93/25336
- WO-A1-95/18715
- DE-A- 4 325 573
- DE-A1- 19 853 834
- DE-C1- 19 530 295
- FR-A- 2 790 418
- US-A- 5 730 925
- US-A- 5 902 537
- US-A- 6 036 777
- H. KUCHLING: 'Taschenbuch der Physik', Bd. 10, 1988, VERLAG HARRI DEUTSCH, THUN UND FRANKFURT/MAIN Seiten 278 - 279
- Asphalt einbauen und verdichten, Deutscher Asphaltverband (DAV) e.V.

## Beschreibung

Die vorliegende Erfindung bezieht sich auf ein Verfahren und eine Vorrichtung zum Auftragen von Fluiden gemäß dem Oberbegriff der unabhängigen Ansprüche 1 und 4. Weiterhin betrifft die Erfindung auch die Verwendung einer solchen Vorrichtung.

In vielen Bereichen der Technik sollen Fluide und dabei insbesondere Partikelmaterialien in dünnen Schichten auf einen Träger aufgetragen werden können. Hierbei ist es häufig auch notwendig, dass die aufgetragenen Schichten eine möglichst glatte Oberfläche aufweisen.

Beispielsweise spielt bei Rapid-Prototyping-Verfahren der glatte Auftrag von zu verbindendem Partikelmaterial eine wichtige Rolle.

Aus der DE 198 53 834.0 ist beispielsweise ein Rapid-Prototyping-Verfahren zum Aufbau von Gussmodellen bekannt. Hierbei wird unbehandeltes Partikelmaterial, wie Quarzsand, auf eine Bauptattform in einer dünnen Schicht aufgetragen. Danach wird mit Hilfe einer Spray-Vorrichtung ein Bindemittel auf das gesamte Partikelmaterial in einer möglichst feinen Verteilung aufgesprüht. Anschließend wird darüber auf ausgewählte Bereiche ein Härter dosiert, wodurch erwünschte Bereiche des Partikrlmaterials verfestigt werden. Nach mehrmaliger Wiederholung dieses Vorgangs kann ein individuell geformter Körper aus dem gebundenen Partikelmaterial bereitgestellt werden. Dieser Körper ist zunächst in dem umliegenden, ungebundenen Partikelmaterial eingebettet und kann nach Abschluß des Bauvorganges aus dem Partikelbett entnommen werden.

Wird beispielsweise bei einem derartigen Rapid-Prototyping-Verfahren als Partikelmaterial ein Quarzsand verwendet und als Bindemittel ein Furanharz, kann mit Hilfe einer schwefeligen Säure als Härtermaterial eine Gussform hergestellt werden, die aus üblicherweise bei der Formherstellung verwendeten und daher dem Fachmann bekannten Materialien besteht.

Schwierigkeiten bei diesen bekannten Verfahren liegen häufig im möglichst glatten und dünnen Auftrag des Partikelmatelmaterials begründet, wodurch die Schichtstärke, also die kleinste Einheit und damit auch die Genauigkeit, mit der die Gußform hergestellt werden kann, bestimmt wird.

Aus der EP 0 538 244 B1 ist beispielsweise ein Verfahren zum Aufbringen einer Schicht von Pulver auf einen Bereich bekannt, wobei dem Bereich Pulvermaterial zugeführt wird, eine Walze über den Bereich bewegt wird und die Walze dabei entgegen ihrer linearen Bewegungsrichtung über den Bereich gedreht wird. Das Pulvermaterial wird durch die in Gegenrichtung drehende Walze kontaktiert, so daß nach dem Überrollen des Bereichs mit der Walze eine Schicht Pulvermaterial auf dem Bereich erreicht wird. Der Beschichtungsschritt wird dabei derart ausgeführt, daß keine wesentliche Scherspannung auf vorher auf den Bereich aufgebrachte Schichten übertragen und die Form nicht zerstört wird, die ebenfalls in derartig- vorher aufgebrachten Schichten erzeugt wurde.

Auch in der US 5,902,537 wird das Auftragen von Partikelmaterial mittels einer gegenläufig sich zur linearen Fortbewegungsrichtung drehenden Walze beschrieben.

Bei derartigen Verfahren zum Auftragen von Pulver hat es sich jedoch bei stark zu Agglomeraten neigenden Pulvern, wie beispielsweise bei mit Binderversehenem oder sehr feinkörnigen Partikelmaterial, gezeigt, dass nur schwer ein glatter und dünner Auftrag des Partikelmaterials zu erreichen ist. Das Partikelmaterial neigt zum Verklumpen, klebt an der Walze fest, so dass keine glatte Oberfläche erreicht werden kann.

Darüber hinaus zeigt die Verwendung einer gegenläufigen Walze insbesondere bei der Verwendung von zum Verklumpen neigenden Partiklmaterial den Nachteil, dass die Verschmutzung aller mit dem Partikelmaterial in Berührung kommenden Teile sehr stark ist, so öfter Wartungsarbeiten notwendig werden und dadurch hohe Kosten entstehen.

Ebenso ist es mit einem in der US 5,730,925 beschriebenen Beschichter nicht möglich, bei der Beschichtung mit zur Agglomeration neigendem Pulver eine glatte Oberfläche zu erreichen, da auch hierbei das Pulver verklumpen wird und so immer eine rauhe Oberfläche entsteht.

Aus der US 6,036,777 ist es bekannt, einen Pulverauftragvorrichtung zum Auftragen von Pulver auf einer Oberfläche vorzusehen. Ein Verteiler, der sich relativ zu einer zu beschichtenden Oberfläche bewegt, verteilt Pulverschichten auf der Oberfläche. Dabei ist zusätzlich ein mit dem Verteiler zusammenwirkender Vibrationsmechanismus zum Kompaktieren des Pulvers vorgesehen.

Dieser Vibrationsmechanismus hat sich auch wieder als nachteilig erwiesen, da durch die vertikale Krafteinbringung in die Partikelschicht eine Komprimierung stattfindet und die vertikale Verdichtung führt zu einem ungleichmäßigen Verdrükken der zu bildenden Form bzw. des Modells. Es kommt somit zu zum unkontrollierten Verschieben der entstehenden Form im Pulverbett, wodurch die Genauigkeit der herzustellenden Form leidet.

Darüber hinaus würde mit stark zu Agglomeraten neigendem Partikelmaterial unter Umständen gar keine glatte Schicht erzeugt werden können.

Genau dieses Erzeugen einer glatten Pulverschicht ist jedoch bei vielen Anwendungen äußerst wichtig. Bei dem oben näher beschriebenen Rapid-PrototypingVerfahren ist es besonders wichtig, möglichst dünne und gleichmäßig glatte Partikelschichten zu erzielen, damit möglichst genaue Bauteile produziert werden können. Denn die Schichthöhe stellt die kleinstmögliche Stufe beim Aufbau des Bauteiles der. Je dicker und ungenauer sie ist, um so grober geformte Bauteile sind die Folge.

Aus der DE-4 325 573 ist eine Pulverauftragsvorrichtung und ein entsprechendes Verfahren bekannt, wonach eine Klinge eine translatorische Schwingungsbewegung durchführt und dabei die Pulverschicht gleichmäßig verteilt. Diese translatorische Schwingungsbewegung ist allerdings technisch verhältnismäßig aufwendig.

Es ist daher Aufgabe der vorliegenden Erfindung, eine vereinfachte Vorrichtung und ein Verfahren bereitzustellen, mit denen eine möglichst ebene Verteilung von fluidem Material auf einem zu beschichtenden Bereich erreicht werden kann.

Erfindungsgemäß wird diese Aufgabe gelöst mit einem Verfahren zum Auftragen von Fluiden der eingangs genannten Art, wobei die Klinge eine Schwingung nach Art einer Drehbewegung ausführt, wobei die Drehbewegung im Bereich eines Drehwinkels von 0,1 bis 5° liegend erfolgt.

Es hat sich gezeigt, dass bei einem derartigen Verfahren das auf den zu beschichtenden Bereich aufgebrachte Fluid, beispielsweise Partikelmaterial, durch die schwingende Drehbewegung der Klinge fluidisiert wird. Hierdurch kann nicht nur stark zur Agglomerierung neigendes Partikelmaterial möglichst eben und glatt aufgetragen werden, sondern es ist darüber hinaus möglich, auch die Verdichtung des Fluids durch die Schwingung zu beeinflussen.

Wird das erfindungsgemäße Verfahren gemäß einer bevorzugten Ausführungsform derart betrieben, dass das Auftragen des Fluids auf den zu beschichtenden Bereich im Überschuss erfolgt, so wird durch die ständige Bewegung der Klinge, die nach Art einer Drehbewegung oszilliert, das überschüssige Fluid, in Vorwärtsbewegungsrichtung der Klinge gesehen, vor der Klinge in einer aus Fluid bzw. Partikelmaterial durch die Vorwärtsbewegung der Klinge gebildeten Walze homogenisiert. Dadurch können etwaige Hohlräume zwischen einzelnen Partikelklumpen gefüllt werden und größere Klumpen Partikelmaterial werden durch die Walzenbewegung aufgebrochen. Es findet eine Homogenisierung des Partikelmaterials in der Walze statt. Aus diesem vor der Klinge sich befindlichen Partikelmaterial wird ein kleiner Tell in einen Spalt unter die Klinge gezogen, dort verdichtet und so als gleichmäßige Schicht aufgebracht.

Das Aufbringen des Fluids bzw. Partikelmaterials im Bereich vor der Schwingklinge, in Vorwärtsbewegungsrichtung der Klinge gesehen, kann hierbei auf jede erdenkliche, dem Fachmann bekannte Art und Weise erfolgen. So wäre es denkbar, dass eine Zufuhr über ein Förderband aus einem Reservoir erfolgt.

Insbesondere ist es möglich, dass die Zufuhr auf eine in der DE 195 30 295 beschriebene Art und Weise durchgeführt wird.

Daneben besteht ebenfalls die Möglichkeit, dass ein mit einem Recoater verfahrender Vorratsbehälter mit Partikelmaterial kontinuierlich etwas Partkelmaterial auf die zu beschichtende Oberfläche vor den Recoater und die sich bewegenden Kline aufgebringt. Dabei kann der Vorratsbehälter von einem weiteren stationären Behälter oder einer anderen Versorgungszufuhr bedient werden.

Um eine möglichst definierte Menge des unter Umständen feuchten Partikelmaterials auf die Oberfläche zu bringen, ist ein unten offener Behälter vorgesehen. Der Sand wird über eine sich dazu in geringem Abstand befindende Schwingrinne und den sich ausbildenen Schüttkegel gedichtet. Bei Betätigung der Schwingrinne läuft der Sand kontinuierlich aus dem Behälter.

Ein definierter Auftrag des Partikelmaterials könnte auch über ein geriffeltes Förderband erfolgen, das den unten offenen Vorratsbehälter dichtet und bei Betätigung den in den Vertiefungen des Bandes liegenden Sand auf die zu beschichtende Oberfläche abwirft. Dies könnte beispielsweise durch eine Rüttelbewegung unterstützt werden.

Es hat sich bei dem erfindungsgemäßen Verfahren als vorteilhaft erwiesen, wenn die Drehbewegung der Klinge um einer Drehachse erfolgt, die in Richtung in Aufbaurichtung des Fluids gesehen, oberhalb des zu beschichtenden Bereiches liegt.

Insbesondere auch zur Durchführung des erfindungsgemäßen Verfahrens eignet sich eine Vorrichtung zum Auftragen von Fluiden, und dabei insbesondere von Partikelmaterial, auf einen zu beschichtenden Bereich, wobei eine Klinge und in Vorwärtsbewegungsrichtung der Klinge gesehen, eine Dosiervorrichtung vorgesehen ist, mittels der auf den vorgegebenen Bereich Fluid aufgetragen wird und die Klinge über dem aufgetragenen Fluid verfahren wird. Die Klinge ist dabei derart angebracht, dass sie eine Schwingung nach Art einer Drehbewegung durchführen kann, die im Bereich eines Drehwinkels von 0,1 bis 5° liegt.

Dabei sollte einer bevorzugten Ausführungsform der Erfindung die Klinge so angebracht sein, dass die Drehbewegung der Klinge um eine Drehachse erfolgt, die in Richtung in Aufbaurichtung des Fluids bzw. Partikelmaterials gesehen, oberhalb des zu beschichtenden Bereiches liegt.

Wenn sich die Klinge über eine gesamte Breite oder Länge des zu beschichtenden Bereichs erstreckt, ist es möglich, die Beschichtung möglichst schnell durchzuführen. Außerdem ist bei einer Beschichtung, die über den gesamten Bereich gleichzeitig erfolgt, auch eine gleichmäßigere Beschichtung möglich

Erstreckt sich die Klinge gemäß einer bevorzugten Ausführungsform der Erfindung im wesentlichen orthogonal zum zu beschichtenden Bereich, ist es möglich die Drehachse möglichst weit entfernt von dem zu beschichtenden Bereich anzuordnen und damit einen sehr exakt einstellbaren Winkel zu ermöglichten.

Weist die Klinge zur orthogonalen Achse des zu beschichtenden Bereichs einen Winkel auf, können bei Verwendung von bestimmten Fluiden noch bessere Schichteigenschaften erreicht werden.

Dabei kann die Vorrichtung derart ausgestaltet sein, dass ein Antrieb der Klinge über zumindest einen schnell laufenden Elektromotor, der über einen Exzenter die Klinge zum Schwingen bringt, erfolgt.

Die Klinge sollte so geformt sein, dass vor ihr, in Vorwärtsbewegungsrichtung gesehen, ein Zwischenreservoir an überschüssigem Fluid ausgebildet werden kann, das vorzugsweise beim Betrieb der Vorrichtung eine Walze ausbildet. Weist die Klinge darüber hinaus eine derartige Form auf, dass beim Bewegen der Klinge ein ausreichend großer Einlass für Partikelmaterial bereitgestellt wird, kann damit zuverlässig und kontinuierlich Material in diesen Einlass eingezogen werden.

Daneben wurden auch sehr gute Ergebnisse erzielt, wenn die Klinge verrundete Kanten aufweist, so dass der Einlass für Partikelmaterial durch einen Radius gebildet wird, der an einer Kante der Schwingklinge gebildet ist.

Ist die Schwingklinge gemäß einer weiteren bevorzugten Ausführungsform aus zwei Teilen, einem geformten Klingenkörper und einem Halter aufgebaut, dann kann der Klingenkörper abgeschraubt werden und auch ausgetauscht werden, wenn beispielsweise der Klingekörper verschleißgeschädigt ist.

Wie schon häufiger erwähnt wurde, hat sich die erfindungsgemäße Vorrichtung insbesondere zur Verwendung zum Auftragen von mit Binder versehenem Partikelmaterial als besonders geeignet erwiesen.

Hierbei kann die Vorrichtung besonders bevorzugt bei einem Verfahren zum Aufbau von Gußmodellen eingesetzt werden.

Weitere vorteilhafte Ausgestaltungen der vorliegenden Erfindung ergeben sich aus den Unteransprüchen sowie der Beschreibung. Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
- Figur 1: eine Vorrichtung zum Beschichten von Partikelmaterial auf einen zu beschichtenden Bereich;
- Figur 2a) und b): die Geometrie einer Schwingklinge gemäß einer ersten Ausführungsform in zur beschichtenden Oberfläche senkrechten Position und in gekippter Position;
- Figur 3: eine gegenüber der Schwingklinge von Figur 2 verbesserte Geometrie einer weiteren Schwingklinge;
- Figur 4a) und b): eine weitere gegenüber der Schwingklinge von Figur 2 verbesserte Geometrie einer Schwingklinge in zur beschichtenden Oberfläche senkrechten Position und in gekippter Position;
- Figur 5: die Darstellung einer Walzenbildung an der Vorderseite der Schwingklinge;
- Figur 6: eine mikroskopisch Vergrößerte Darstellung der erzeugten Schicht;
- Figur 7: eine mikroskopisch Vergrößerte Darstellung der erzeugten Schicht, die teilweise eingedrückt wurde; und
- Figur 8: die Wirkungsweise einer erfindungsgemäßen Schwingklinge.

Beispielhaft soll im folgenden das erfindungsgemäße Verfahren und die erfindungsgemäße Vorrichtung für den Einsatz beim schichtweisen Aufbau von Gussmodellen aus Partikelmaterial, Bindemittel und Härter bei einem Rapid-Prototyping-Verfahren erläutert werden.

Insbesondere soll dabei von einem schon mit Binder versehenen Partikelmaterial ausgegangen werden, das üblicherweise besonders stark zum Verklumpen neigt.

Die Verwendung eines solchen Partikelmaterials weist jedoch den Vorteil auf, dass der üblicherweise beim Rapid-Prototyping-Verfahren notwendige Schritt des Beschichtens des Partikel materials mit Binder entfällt und damit das Aufbauen schneller und kostengünstiger durchgeführt werden kann.

Insbesondere bei zur Agglomerierung neigenden Partiekelmaterialien hat sich der Einsatz des erfindungsgemäßen Verfahrens und der Vorrichtung als vorteilhaft erwiesen.

Daneben neigen aber ebenso Partikelmaterialien mit kleiner mittlerer Korngröße von weniger als 20 µm und auch beispielsweise Wachspulver stark zur Agglomerierung.

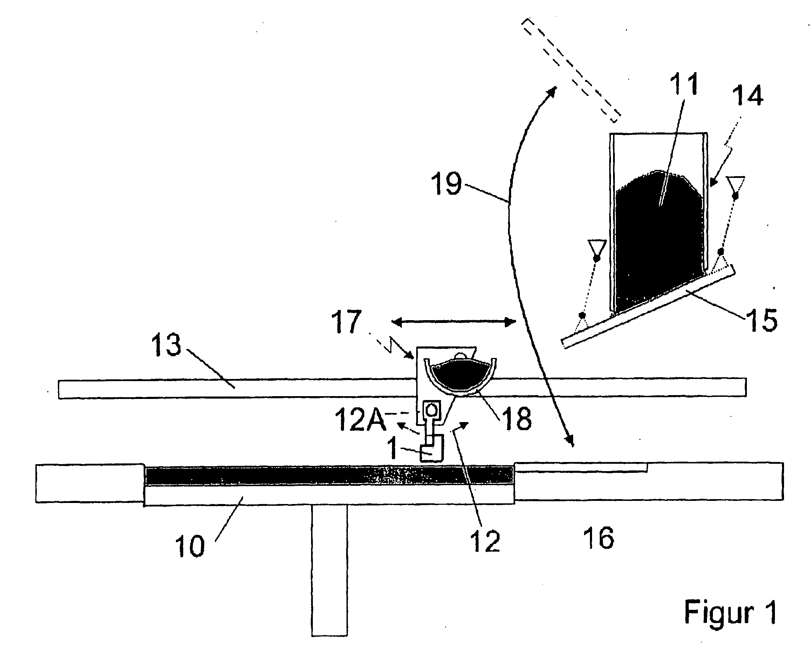

Bei einem Aufbauverfahren, das unter Bezugnahme auf Figur 1 beschrieben wird, eines Bauteiles, wie eines Gussmodelles, wird eine Bauplattform 10, auf die die Gussform aufgebaut werden soll, um eine Schichtstärke des Partikelmaterials 11 abgesenkt. Danach wird Partikelmaterial 11, beispielsweise Quarzsand, der gemäß einer bevorzugten Ausführungsform mit 2 % Binder (z.B. Albertus 0401 der Firma Hüttenes, Resifix der Firma Hüttenes) versehen ist, in einer erwünschten Schichtstärke auf die Bauplattform 10 aufgetragen. Daran schließt sich das selektive Auftragen von Härter auf auszuhärtende Bereiche an. Dies kann beispielsweise mittels eines Drop-ondemand-Tropfenerzeugers, nach Art eines Tintenstrahldruckers, durchgeführt werden. Diese Auftragungsschritte werden wiederholt, bis das fertige Bauteil, eingebettet in loses Partikelmaterial 11, erhalten wird.

Gemäß einer bevorzugten Ausführungsform befindet sich über der Bauplattform 10 eine Klinge 1, die aus Kunststoff gebildet ist und eine Drehbewegung 12 um einer Drehachse 12A ausführt. Angetrieben wird die Drehbewegung 12 dieser Klinge 1 derart, dass ein schnell laufender Elektromotor über einen Exzenter die Klinge zum Schwingen bringt.

Der verwendete Motor hat beispielsweise eine Nenndrehzahl bei 12 V von 3000 U/min, der Hub des Exzenters beträgt 0,54 mm, was gemäß dem beschriebenen Beispiels einer Amplitude an der Klingenspitze von 0,85 mm entspricht. Bei 15 V wurde eine Drehzahl von 4050 U/min gemessen. Dieser Wert entspricht 67,5 Hz. Je nach Breite der Klinge 1 kann es notwendig sein, mehrere Antriebseinheiten vorzusehen.

Der Verfahrweg der Schwingklinge bzw. Klinge 1 über den zu beschichtenden Bereich, hier die sogenannte Bauplattform 10, wird über seitlich angebrachte Führungen 13 definiert. Der Antrieb erfolgt dabei vorzugsweise mittels mindestens eines Motors, beispielsweise derart, dass ein über zwei Rollen umgelenkter Zahnriemen, der entlang der Führungsschiene verläuft, an der Schwingklingenhalterung befestigt wird. Eine der Umlenkrollen wird motorisch angetrieben.

Aufgrund der Volumentoleranz des erfindungsgemäßen Beschichtungssystems bzw. Recoaters ist es nun möglich, eine größere Menge Partikelmaterial 11 zu Beginn des Beschichtungsvorganges vor der Schwingklinge 1 abzulegen, die dann für die gesamte Bauplattform 10 ausreicht. Hierfür wird gemäß der gezeigten bevorzugten Ausführungsform ein stationärer Behälter 14 eingesetzt, der über eine Schwingrinne 15 entleert wird. Der Behälter 14 ist also unten in Richtung zur Bauplattform 10 hin offen und das Partikelmaterial 11 im Behälter 14 wird über die im geringen Abstand zu der Öffnung liegende Schwingrinne 15 und den sich ausbildenden Schüttkegel gedichtet. Bei Betätigung der Schwingrinne 15 läuft nun der Quarzsand 11 kontinuierlich aus dem Behälter 14.

Bei Versuchen wurde gefunden, dass bei dem erfindungsgemäßen Verfahren eine relativ hohe Überschußdosierung des Partikelmaterials 11 vorteilhaft ist, um auch am Ende der Bauplattform 10 ausreichend Partikelmaterial 11 zur Verfügung zu haben. Die Menge sollte dabei vorzugsweise mindestens 20 % größer sein als notwendig, es sind aber auch Werte im Bereich von 100 % vorteilhaft. Die überschüssige Menge Partikelmaterial 11 wird durch die Schwingklinge 1 in einen linienförmig ausgebildeten Schacht 16, der sich am hinteren Ende der Bauplattform 10 befindet, geschoben.

Damit jedoch durch die Überschußdosierung nicht Partikelmaterial 11 ungenutzt verschwindet, wird dieses Partikelmaterial 11 wieder in den Vorratsbehälter 14 befördert. Hierzu ist am Beschichter 17 ein Zwischenbehälter 18 vorgesehen, der das Schichtvolumen und das Überschußvolumen des Partikelmaterials 11 trägt. Der Zwischenbehälter 18 wird aus dem Vorratsbehälter 14 über die Schwingrinne 15 befüllt, fährt dann in Schnellfahrt über die tiefer als notwendig abgesenkte Bauplattform 10 zur anderen Seite, legt hier vor der Schwingklinge 1 den Inhalt des Zwischenbehälters 18 ab und beginnt, nachdem die Bauplattform 10 in die richtige Höhe gefahren ist mit dem Beschichten in Richtung des Vorratsbehälters 14. Dort wird das überschüssige Partikelmaterial 11 über eine Hebevorrichtung wieder in den Vorratsbehälter 14 befördert. Dieser Vorgang ist durch den Pfeil 19 dargestellt.

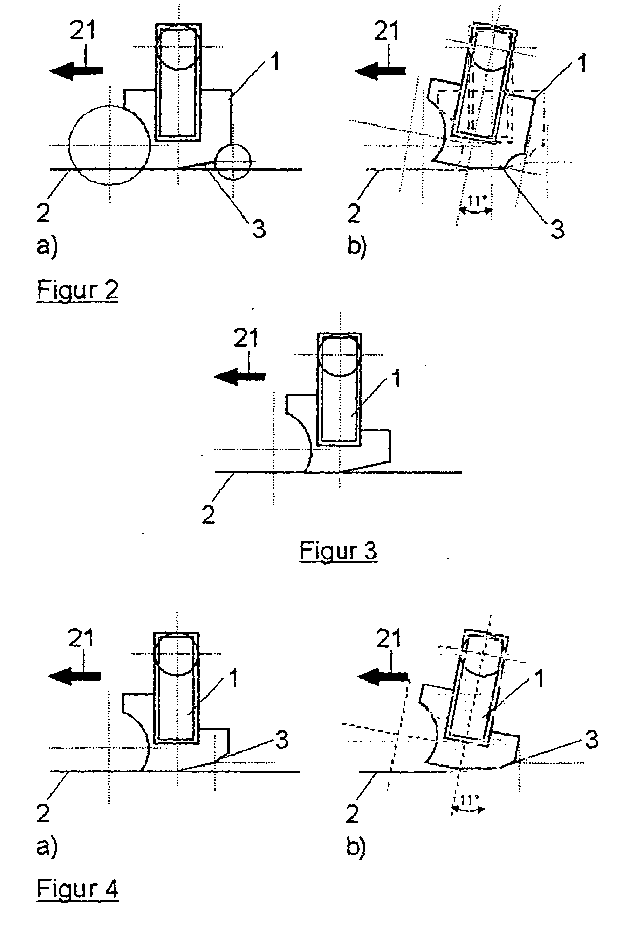

Die Figur 2 zeigt nun eine erste Form der Schwingklinge 1 gemäß einer ersten Ausführungsform in einer zum beschichtenden Bereich 2 senkrechten Position in Figur 2a) und in gekippter Position in Figur 2b). Die Vorwärtsbewegungsrichtung der Schwingklinge 1 ist durch den Pfeil 21 gekennzeichnet.

Wie dabei insbesondere der Figur 2b) entnommen werden kann, kann bei dieser in der Figur 2 gezeigten Geometrie der Schwingklinge 1 bei einer Rückwärtsbewegung ein Aufrauhen der zuerst erzeugten, im wesentlichen glatten Oberfläche durch die Kante 3 möglich sein.

Die Figur 3 zeigt eine gegenüber der in Figur 2 dargestellten verbesserte Geometrie der Schwingklinge1 und Figur 4a) und b) eine weitere gegenüber der in Figur 2 dargestellten verbesserte Geometrie der Schwingklinge 1 in senkrechter Position (Figur 4a) und in gekippter Position (Figur 4b).

Die Klinge 1 aus Figur 4 unterscheidet sich von der in Figur 2 dargestellten dadurch, dass an der Kante 3 eine Einzugsschräge vorgesehen ist, durch die auch bei einer Rückwärtsbewegung wieder Partikelmaterial 11 unter die Klinge 1 gezogen wird. Derart kann eine glatte Oberfläche des zu beschichtenden Materials auch im Rücklauf der Klinge 1 erzielt werden.

Besonders gute Ergebnisse konnten erzielt werden, wenn die Verfahrgeschwindigkeit der Klinge 1 im Bereich von bis zu 70 mm/s, bevorzugt bis zu 60 mm/s liegend gewählt wird. Bei zu hohen Verfahrgeschwindigkeiten kann die Oberfläche des zu beschichtenden Materials wieder schlechter werden.

Es hat sich insbesondere als vorteilhaft erwiesen, wenn die Verfahrgeschwindigkeit bei 60 Hz und 50 mm/s liegt.

Für eine besonders glatte Schicht wurde eine kleine rückwärts gerichtete Relativbewegung der Klinge 1 als notwendig, die jedoch nicht so groß sein soll, dass die Schwingklinge 1 wieder in den bereits überstrichenen Oberflächenbereich eindringen sollte.

Es hat sich gezeigt, dass bei einem solchen Auftrag das beschichtete Material keine Scherrisse aufweist, die bei einer Beschichtung mit einer gegenläufigen Walze immer auftreten.

Überraschenderweise hat es sich herausgestellt, dass ein Überschuss an Partikelmaterial 11 vor der Klinge 1 zu guten Ergebnissen führt. Selbst extrem große Partikelanhäufungen vor der Klinge 1 können problemlos über den zu beschichtenden Bereich 2 transportiert werden.

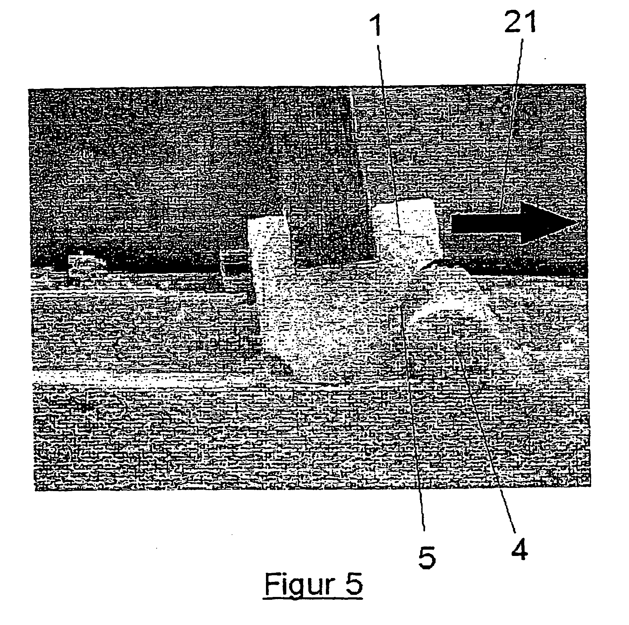

In der Figur 5 ist die Walzenbildung 4 an der Vorderseite, in Vorwärtsbewegungsrichtung der Klinge 1, die durch den Pfeil 21 dargestellt ist, gesehen, der Schwingklinge 1 dargestellt.

Wenn das vor der Klinge 1 angesammelte Partikelmaterial 11 nicht mehr in die Walze 4 passt, die sie hier.in einer Wölbung 5 der Klinge 1 bildet, wird es einfach oberhalb der Walze 4 als Brocken mittransportiert. Da diese Klumpen jedoch nicht mit der darunter liegenden Schicht in Kontakt kommen, entstehen durch die Klumpen auch keine Scherkräfte, die die neu erzeugte Oberfläche beschädigen können.

Auch große Verunreinigungen, wie zum Beispiel harte Sandklumpen und abgeplatzte Verkrustungen werden auf diese Weise zusammen mit dem überschüssigen Partikelmaterial problemlos an das Ende des Baufeldes transportiert und dort in den Überlauf geschoben.

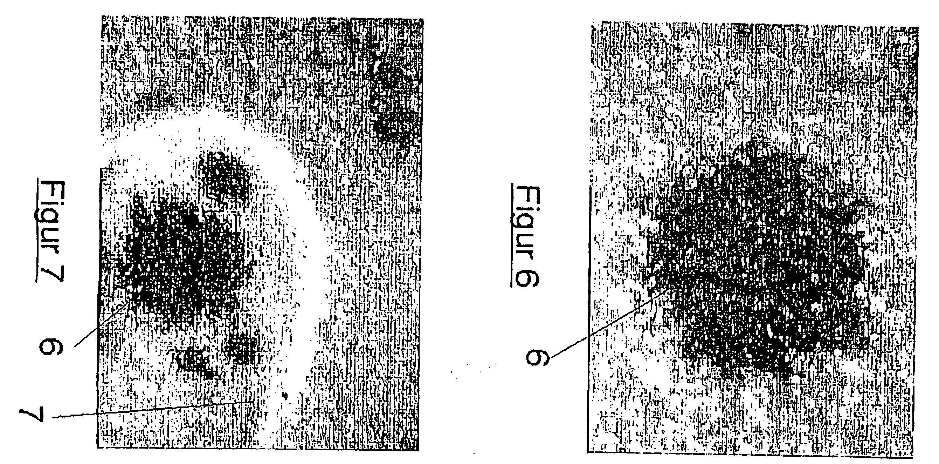

Die Figur 6 zeigt die erzeugte Schicht aus von mit Binder versehenem Partikelmaterial 11 unter einem Mikroskop. Auf die Schicht wurde ein Härtetropfen 6 aufgebracht, der einen Durchmesser von etwa 4,5 mm aufweist. Im Gegensatz zu trockenem Sand, bei dem sich die Sandkörner aufgrund der Kapillarkraft der Flüssigkeit zusammenziehen und dadurch eine Art Wall an der Außenseite der benetzten Stelle bilden, bleibt hier die Schicht völlig eben.

In der Figur 7 kann man sehen, dass die erzeugte Schicht durch Eindrücken nicht unbedingt verbessert werden könnte, Der runde Eindruck 7 am unteren rechten Bildrand wurde durch eine Spatelspitze erzeugt. Es zeigt sich jedoch, dass das Verhalten eines aufgebrachten Härtertropfens 6 sich nicht wesentlich unterscheidet, wenn man ihn auf diese stärker verdichtete Oberfläche aufbringt. Eine verringerte Neigung zum "Bluten" an der Kante des Tropfens 6 ist nicht zu beobachten.

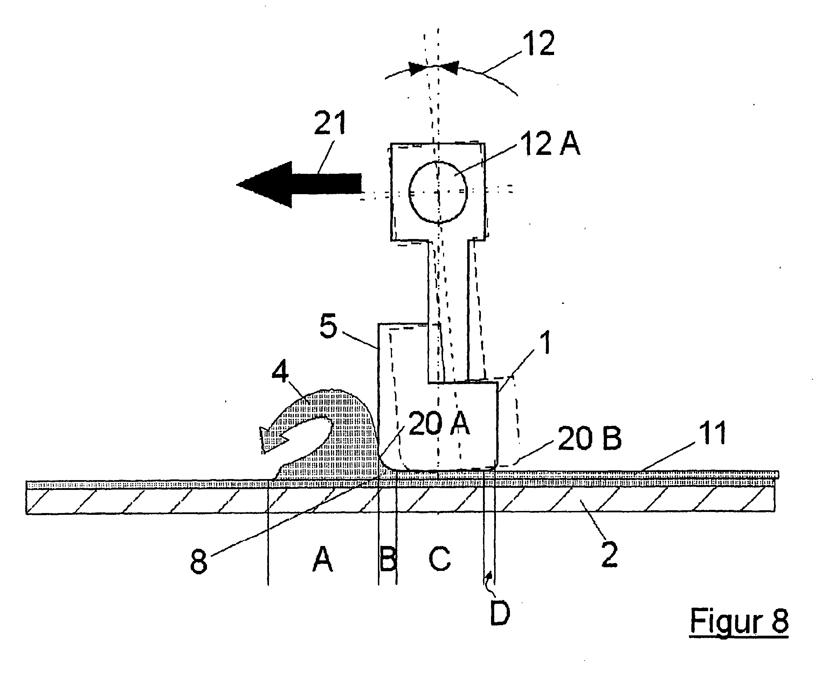

In der Figur 8 ist die Wirkungsweise der Schwingklinge 1 schematisch dargestellt. Es ist hierbei eine Schwingklinge 1 dargestellt, die im wesentlichen zueinander senkrechte Kanten aufweist, wobei die dem zu beschichtenden Bereich 2 zugewandten Kanten abgerundet sind, also mit einem Radius 20A, 20 B versehen sind. Der Radius 20A, der in Vorwärtsbewegungsrichtung 21 gesehen vorne an der Klinge 1 vorgesehen ist, beträgt gemäß der gezeigten bevorzugten Ausführungsform 3 mm.

An der Vorderseite 5 der Schwingklinge 1 bildet sich eine Walze 4 aus überschüssigem Partikelmaterial 11 aus, die sich über die gesamte Breite der Klinge 1 erstreckt. Durch die ständige Rollbewegung wird das Material in der Walze 4 homogenisiert. Das bedeutet, dass die erfindungsgemäße Vorrichtung hervorragend mit einer Überdosierung an Partikelmaterial 11 arbeitet. Der Überschuss führt zur Ausbildung einer Walze 4. Wird eine derartige Walze 4 bei einem erfindgsgemäßen Verfahren nicht vollständig ausgebildet, so kann dies zur Ausbildung von Fehlstellen in der Partikelschicht auf den zu beschichtenden Bereich 2 führen.

Aus diesem Partikelmaterial 11 in der Walze 4 wird ein kleiner Teil in den durch den Radius 20A gebildeten Spalt 8 unter die Klinge 1 gezogen, dort verdichtet und als gleichmäßige Schicht auf den zu beschichtenden Bereich 2 aufgebracht. Die Geometrie der Schwingklinge 1 sollte dabei derart gewählt sein, dass ein ausreichend großer Einlass für das Partikelmaterial 11 geschaffen wird, damit zuverlässig und kontinuierlich Material in diesen Spalt gezogen wird und zum anderen aber auch keine unzulässig hohe Verdichtung des zu beschichtenden Fluids erhalten wird.

In der Figur 8 ist mit A der Homogenisierungsbereich, mit B der Komprimierbereich, mit C der Glättbereich und mit D der Kompressionsbereich im Rückhub bezeichnet. Um nun eine zu starke Kompression zu vermeiden, ist die der Vorwärtsbewegungssrichtung 21 abgewandte Kante der Schwingklinge 1 ebenfalls gut verrundet mit einem kleinen Radius 20B versehen.

Im Betrieb sollte es möglich sein, bei Bedarf auch beim Zurückfahren, also einer Bewegung der Klinge 1 entgegen des Pfeiles 12 noch eine zusätzliche Glättung der Oberfläche des beschichteten Partikel materials 11 zu erreichen. Aus diesem Grund ist die Hinterkante so ausgebildet, dass auch hier ein Materialeinzug, wenn auch in nur geringem Maße, stattfinden kann.

Allgemein hat es sich gezeigt, dass die Übergänge zwischen den einzelnen Kanten der Schwingklinge 1 gut zu verrundet werden sollen, um bessere Ergebnisse zu erzielen. Dies kann zum Beispiel durch leichtes Brechen der Kanten erreicht werden oder, wie schon beschrieben über die Ausgestaltung der Kanten als Radien erreicht werden.

Es ist darüber hinaus auch möglich durch eine Änderung des Neigungswinkels der Klinge 1 problemlos und schnell andere Verhältnisse in der Kompressionszone B zu schaffen. Dadurch wäre es auch möglich, die Klinge 1 ohne Kompression zu betreiben. Dies ist beispielsweise bei der Beschichtung mit trockenem Sand interessant.

Die besten Ergebnisse konnten erzielt werden, wenn die Klinge 1 um ihre Nullage herum pendelt, Nulllage soll hier die zum beschichtenden Bereich 2 senkrechte Position sein.

Es hat sich bei dem erfindungsgemäßen Verfahren gezeigt, dass auch ein mit Binder versetzter Sand als Schicht mit einer Stärke von nur 0,3 mm problemlos aufgebracht werden kann.

Zwischenzeitlich sind sogar Schichten mit weniger als 0,2 mm möglich, auch wenn gröbere Körner im Material vorhanden sind. Diese werden entweder in die vorhandene Porenstruktur der letzten Schicht miteingebaut, wenn diese eine entsprechende Größe aufweisen oder aber werden gar nicht erst in den Spalt unter die Klinge eingezogen, sondern in der Walze vor der Schwingklinge hergeschoben.

Die Packungsdichte der erfindungsgemäß erhaltenen Schicht ist relativ niedrig und damit die Porosität relativ hoch. Sie ist jedoch immer noch deutlich geringer als bei der Beschichtung von trockenem Sand mit einem Spaltbeschichter.

## Patentansprüche

1. Verfahren zum Auftragen von Fluiden, insbesondere Partikelmaterial, auf einen zu beschichtenden Bereich, wobei vor einer Klinge, in Vorwärtsbewegungsrichtung der Klinge gesehen, das Fluid auf den zu beschichtenden Bereich aufgetragen wird und danach die Klinge über dem aufgetragenen Fluid verfahren wird, **dadurch gekennzeichnet, dass** dabei die Klinge (1) eine Schwingung nach Art einer Drehbewegung ausführt, wobei die Drehbewegung im Bereich eines Drehwinkels von 0,1 bis 5° liegend erfolgt.

2. Verfahren nach Anspruch 1, **dadurch gekennzeichnet, dass** das Auftragen des Fluids auf den zu beschichtenden Bereich (2) mit einem Überschuss erfolgt.

3. Verfahren nach Anspruch 1 oder 2, **dadurch gekennzeichnet, dass** die Drehbewegung (12) der Klinge (1) um eine Drehachse (12A) erfolgt, die in Richtung in Aufbaurichtung des Fluids gesehen, oberhalb des zu beschichtenden Bereiches liegt.

4. Vorrichtung zum Auftragen von Fluiden, insbesondere bei einem Verfahren nach einem der vorhergehenden Ansprüche, auf einen zu beschichtenden Bereich, wobei eine Klinge und in Vorwärtsbewegungsrichtung der Klinge gesehen eine Dosiervorrichtung vorgesehen ist, mittels der auf den zu beschichtenden Bereich Fluid aufgetragen wird und die Klinge über dem aufgetragenen Fluid verfahren wird, **dadurch gekennzeichnet, dass** die Klinge (1) dabei derart angebracht ist, dass sie eine Schwingung Art einer Drehbewegung ausführen kann, die im Bereich eines Drehwinkels von 0,1 bis 5° liegt.

5. Vorrichtung nach Anspruch 4, **dadurch gekennzeichnet, dass** die Drehachse (12A) für die Drehbewegung (12) der Klinge (1), in Richtung der Aufbaurichtung des Fluids gesehen, oberhalb des zu beschichtenden Bereiches (2) liegt.

6. Vorrichtung nach einem der Ansprüche 4 oder 5, **dadurch gekennzeichnet, dass** sich die Klinge (1) über eine gesamte Breite oder Länge des zu beschichtenden Bereichs (2) erstreckt.

7. Vorrichtung nach einem der Ansprüche 4 bis 6, **dadurch gekennzeichnet, dass** sich die Klinge (1) im wesentlichen orthogonal zum zu beschichtenden Bereich (2) erstreckt.

8. Vorrichtung nach einem der Ansprüche 4 bis 7, **dadurch gekennzeichnet, dass** ein Antrieb der Klinge (1) über zumindest einen schnell laufenden Elektromotor, der über einen Exzenter die Klinge (1) zum Schwingen bringt, erfolgt.

9. Vorrichtung nach einem der Ansprüche 4 bis 8, **dadurch gekennzeichnet, dass** die Klinge (1) eine derartige Form aufweist, dass vor ihr, in Vorwärtsbewegungsrichtung (21) der Klinge (1) gesehen, ein Zwischenreservoir an Fluid ausgebildet werden kann, das vorzugsweise die Form einer Walze (4) ausbildet.

10. Vorrichtung nach einem der Ansprüche 4 bis 9, **dadurch gekennzeichnet, dass** die Klinge (1) im Bereich der dem zu beschichtenden Bereich (2) zugewandten Fläche in Richtung der Vorwärtsbewegung und/oder Rückwärtsbewegung in Richtung zum zu beschichtenden Bereich (2) abgerundete Kanten (20A, 20B) aufweist.

11. Verwendung der Vorrichtung nach einem der Ansprüche 4 bis 10 zum Auftragen von mit Bindemittel versehenem Partikelmaterial (11).

12. Verwendung der Vorrichtung nach einem der Ansprüche 4 bis 10 bei einem Verfahren zum Aufbau von Gußmodellen.

## Claims

1. A method for applying fluids, in particular particulate material, onto an area to be coated, wherein the fluid is applied in front of a blade, viewed in the forward movement direction of the blade, onto the area to be coated and then the blade is moved over the applied fluid, **characterised in that** the blade (1) performs an oscillation in the manner of a rotary motion, said rotary motion being performed at an angle of rotation within a range of from 0.1 to 5°.

2. The method according to claim 1, **characterised in that** an excessive amount of the fluid is applied onto the area (2) to be coated.

3. The method according to claim 1 or 2, **characterised in that** the rotary motion (12) of the blade (1) is performed about a pivot (12A) which, when viewed in the build-up direction of the fluid, is located above the area to be coated.

4. A device for applying fluids, in particular in a method according to anyone of the preceding claims, onto an area to be coated, said device being provided with a blade and, viewed in the forward movement direction of the blade, with a metering device by means of which fluid is applied onto the area to be coated and the blade is moved over the applied fluid, **characterised in that** the blade (1) is attached so as to allow it to perform an oscillation in the manner of a rotary motion at an angle of rotation located within a range of from 0.1 to 5°.

5. The device according to claim 4, **characterised in that** the pivot (12A) for the rotary motion (12) of the blade (1), when viewed in the build-up direction of the fluid, is located above the area (2) to be coated.

6. The device according to any one of claims 4 or 5, **characterised in that** the blade (1) extends over an entire width or length of the area (2) to be coated.

7. The device according to any one of claims 4 to 6, **characterised in that** the blade (1) extends substantially orthogonally to the area (2) to be coated.

8. The device according to any one of claims 4 to 7, **characterised in that** the blade (1) is driven via at least one high-speed electric motor which causes the blade (1) to oscillate via an eccentric.

9. The device according to any one of claims 4 to 8, **characterised in that** the blade (1) is shaped such that an intermediate reservoir of fluid can be formed in front of the blade (1), when viewed in the forward movement direction (21) of the blade (1), said reservoir preferably taking the shape of a roller (4).

10. The device according to any one of claims 4 to 9, **characterised in that** the blade (1) is provided, in the region of its surface facing the area (2) to be coated, with edges in the direction of the forward movement and/or backward movement, said edges (20A, 20B) being rounded off in the direction of the area (2) to be coated.

11. Use of the device according to any one of claims 4 to 10 for applying particulate material (11) provided with a binding agent.

12. Use of the device according to any one of claims 4 to 10 in a method of construction of casting models.

## Revendications

1. Procédé d'application de fluides, notamment du matériau en particules, sur une région à enduire, dans lequel procédé le fluide est appliqué sur la région à enduire, située devant une lame en vue dans la direction de mouvement en avant de la lame, et puis ladite lame est déplacée sur le fluide appliqué, **caractérisé en ce que** la lame (1) effectue une oscillation à la manière d'un mouvement rotatif, ledit mouvement rotatif étant effectué sous un angle de rotation compris entre 0,1 et 5°.

2. Procédé selon la revendication 1, **caractérisé en ce que** l'on applique un excès du fluide sur la région à enduire (2).

3. Procédé selon la revendication 1 ou 2, **caractérisé en ce que** le mouvement rotatif (12) de la lame (1) est effectué autour d'un pivot (12A) qui, en vue dans la direction de constitution du fluide, est situé au-dessus de la région à enduire.

4. Dispositif d'application de fluides, notamment dans un procédé selon l'une quelconque des revendications précédentes, sur une région à enduire, ledit dispositif présentant une lame et, en vue dans la direction de mouvement en avant de la lame, un dispositif de dosage au moyen duquel du fluide est appliqué sur la région à enduire et la lame est déplacée sur le fluide appliqué, **caractérisé en ce que** la lame (1) est montée de manière à permettre son oscillation à la manière d'un mouvement rotatif sous un angle de rotation compris entre 0,1 et 5°.

5. Dispositif selon la revendication 4, **caractérisé en ce que** le pivot (12A) pour le mouvement rotatif (12) de la lame (1), en vue dans la direction de constitution du fluide, est situé au-dessus de la région à enduire (2).

6. Dispositif selon l'une quelconque des revendications 4 ou 5, **caractérisé en ce que** la lame (1) s'étend sur toute une largeur ou toute une longueur de la région à enduire (2).

7. Dispositif selon l'une quelconque des revendications 4 à 6, **caractérisé en ce que** la lame (1) s'étend de manière sensiblement orthogonale par rapport à la région à enduire (2).

8. Dispositif selon l'une quelconque des revendications 4 à 7, **caractérisé en ce qu'**un entraînement de la lame (1) s'effectue au moyen d'au moins un moteur électrique à grande vitesse qui fait osciller la lame (1) au moyen d'un excentrique.

9. Dispositif selon l'une quelconque des revendications 4 à 8, **caractérisé en ce que** la lame (1) présente une forme qui permet de constituer un réservoir de fluide intermédiaire en avant de la lame (1), en vue dans la direction de mouvement en avant (21) de la lame (1), ledit réservoir se constituant de préférence sous forme d'un rouleau (4).

10. Dispositif selon l'une quelconque des revendications 4 à 9, **caractérisé en ce que** la lame (1) présente, dans la région de sa face tourné vers la région à enduire (2), des bords dans la direction de mouvement en avant et/ou en arrière, lesdits bords (20A, 20B) étant arrondis en direction vers la région à enduire (2).

11. Utilisation du dispositif selon l'une quelconque des revendications 4 à 10 pour l'application d'un matériau en particules (11) qui comporte un liant.

12. Utilisation du dispositif selon l'une quelconque des revendications 4 à 10 dans un procédé de constitution de modèles de fonte.
